# FASCICULE DE BREVET EUROPEEN

(11) **EP 2 637 974 B1**
(45) Date de publication et mention de la délivrance du brevet: **22.06.2016**
(21) Numéro de dépôt: 11796738.0
(22) Date de dépôt: 09.11.2011
(51) Int. Cl.: C02F 1/467, C02F 103/42

(54) **COMPOSITION MULTIFONCTIONS POUR LE TRAITEMENT DE DESINFECTION DE L'EAU ET UTILISATION DE CETTE COMPOSITION**
MULTIFUNKTIONSZUSAMMENSETZUNG ZUR DESINFEKTION VON WASSER UND VERWENDUNG DIESER ZUSAMMENSETZUNG
MULTIFUNCTIONAL COMPOSITION FOR THE DISINFECTION TREATMENT OF WATER AND USE OF THIS COMPOSITION

(30) Priorité: 09.11.2010 FR 1059262
(43) Date de publication de la demande: 18.09.2013
(73) Titulaire: Compagnie Des Salins Du Midi Et Des Salines De L'Est, 92300 Levallois-Perret (FR)
(72) Inventeur: MASSEL, Arnaud, F-34280 La Grande Motte (FR)
(74) Mandataire: McDade, Sophie V.G.A.
(86) Numéro de dépôt international: PCT/FR2011/052613
(87) Numéro de publication internationale: WO 2012/063001

(56) Documents cités:
- GB-A- 849 907
- US-A- 3 623 991
- US-A1- 2003 231 979

## Description

La présente invention concerne le domaine de la désinfection de l'eau de piscine par électrochloration. L'invention concerne plus particulièrement une composition multifonctions et son utilisation dans le traitement de l'eau des piscines.

La désinfection de l'eau peut être effectuée par un procédé électrolytique *in situ* d'une solution saline de chlorure de sodium permettant la production de chlore se transformant en acide hypochloreux. Les eaux pouvant être traitées de cette façon sont par exemple les eaux de baignade, et en particulier de piscines, les eaux de refroidissement industriel et les eaux résiduaires urbaines.

Parmi les compositions de l'art antérieur, on peut en particulier citer le brevet français FR 2 670 198 qui décrit une composition pour la désinfection de l'eau par un procédé d'électrochloration comprenant au moins un chlorure alcalin et un agent stabilisant du chlore vis-à-vis des UV. L'agent stabilisant pouvant en particulier être de l'acide isocyanurique, présent en une teneur allant de 0,3 à 0,8 % en poids par rapport au poids total du sel utilisé dans la composition.

Or, l'entretien des piscines requiert différents types d'action : il s'agit non seulement de désinfecter l'eau mais également d'éviter la prolifération des algues, d'éviter les dépôts de calcaire encore appelé tartre et/ou de les éliminer, de combattre la corrosion et d'éviter la formation de taches (action anti-dépôt et/ou action facilitant le nettoyage des taches).

La demande de brevet FR 2 938 528 décrit une composition multifonctions pour le traitement de désinfection de l'eau des piscines présentant les fonctions désinfectante, anti-algue, anti-calcaire, anti-corrosion et/ou anti-tache, ainsi qu'une fonction de stabilisation du chlore. Cette composition comporte comme agent anti-corrosion, anti-calcaire et anti-tache de l'HEDP (acide hydroxy-1-éthane-disphosphonique-1,1).

Toutefois, il a été rapporté que l'ajout de l'HEDP dans l'eau des piscines pouvait induire un trouble de l'eau dans certains cas. Bien que ce trouble ne soit absolument pas lié à une détérioration de la qualité de l'eau de la piscine, ce trouble est peu apprécié par l'utilisateur, qui souhaite disposer d'une eau claire, plus esthétique.

La demande US 2003/0231979 décrit des compositions complexes contenant généralement de l'acide cyanurique en des concentrations élevées, et à la fois des bromures et chlorures de sodium, ainsi que des molybdates et métasilicates.

Il subsiste donc un besoin pour une composition permettant de résoudre en tout ou partie les problèmes évoqués ci-dessus, tout au moins une composition multifonctions par rapport à différents aspects du traitement des eaux, pouvant notamment permettre un traitement total ou quasi-total de l'eau par l'action de cette seule composition, sans induire de trouble de l'eau.

L'invention a donc pour objet une composition pour traitement de désinfection de l'eau de piscine par électrochloration, ladite composition comprenant un chlorure alcalin, un métasilicate et un agent stabilisant du chlore. La composition consiste en un chlorure alcalin, un métasilicate, un agent stabilisant du chlore et éventuellement un colorant.

Cette composition permet non seulement la désinfection de l'eau et éventuellement la stabilisation du chlore mais également d'éviter le dépôt du calcaire, de diminuer la corrosion. Elle peut également éviter la prolifération des algues et avoir une action anti-tache.

Par « anti-tache », on entend au sens de la présente invention une diminution, voire une élimination, des dépôts et/ou une amélioration dans la facilité de nettoyage desdits dépôts.

Bien entendu, la composition selon l'invention présente la plupart ou la totalité des fonctions décrites lorsqu'elle est utilisée avec un appareil d'électrolyse permettant la production de chlore.

De plus, l'introduction du métasilicate dans la composition permet d'assurer les fonctions anti-corrosion et anti-calcaire sans induire de trouble de l'eau de la piscine (voir exemple 2). Le métasilicate présente également l'avantage de préserver une éventuelle action stabilisante du chlore (voir exemple 5) et peut présenter une action anti-tache.

Le métasilicate est un métasilicate de disodium, de formule Na₂SiO₃. Il est sous forme pentahydratée.

La teneur en métasilicate de disodium pentahydraté est de 0,10 à 1,00 % préférentiellement de 0,20 à 0,70 %, plus préférentiellement de 0,30 à 0,60 % en poids par rapport au poids total du chlorure alcalin, ou sel, utilisé dans la composition.

Tout particulièrement, la composition comprend une quantité de métasilicate telle que la teneur en ion métasilicate (SiO₃²⁻) dans l'eau est supérieure ou égale à 1,5 mg/L. Tout particulièrement cette teneur peut aller de 4,5 à 9 mg/L.

La composition comprend un chlorure alcalin, qui est du chlorure de sodium. Ce chlorure alcalin présente en particulier les caractéristiques suivantes :
- teneur minimale en composés alcalino-terreux, par exemple la teneur en magnésium peut être inférieure à 5 mg/kg, voire à 3 mg/kg et/ou la teneur en calcium peut être inférieure à 500 mg/kg, voire à 250 mg/kg,
- très faible teneur en matières insolubles dans l'eau, en particulier une teneur inférieure à 50 mg/kg, notamment inférieure à 30 mg/kg,
- très faible teneur en matières organiques oxydables,
- très faible teneur en fer, cuivre et manganèse, en particulier pour optimiser le rendement électrolytique et/ou prévenir les risques de corrosion. Par exemple la teneur en fer peut être inférieure à 3 mg/kg, la teneur en cuivre inférieure à 2 mg/kg, et/ou la teneur en manganèse inférieure ou égale à 2 mg/kg.
Ces teneurs sont données en mg par kg de chlorure alcalin.

On entend par « très faible teneur » au sens de la présente invention une teneur inférieure ou égale à 200 mg/kg, notamment inférieure ou égale à 100 mg/kg.

L'agent stabilisant du chlore, en particulier par rapport aux rayonnements ultraviolet, permet de limiter la destruction par les UV des ions hypochlorites provenant du chlore formé par le procédé d'électrochloration.

L'agent stabilisant sera de l'acide isocyanurique. Il est présent en une teneur allant de 0,3 à 1,0 % , préférentiellement de 0,5 à 0,9 %, plus préférentiellement de 0,6 à 0,8 % en poids par rapport au poids total du chlorure alcalin, ou sel, utilisé dans la composition.

Tout particulièrement, cette composition se présente sous forme solide, en particulier sous forme de galets, comprimés, blocs, pilules, pastilles, compacts, agglomérés ou granulés. Ces formes solides peuvent être obtenues par compression du mélange.

La forme solide de la composition offre plusieurs avantages, parmi lesquels on peut citer :
- l'amélioration de la conservation de cette composition, en particulier par rapport à la forme liquide,
- une bonne homogénéité,
- une bonne sécurité, notamment vis-à-vis de l'ingestion accidentelle ou involontaire par des enfants,
- une incorporation aisée de composants même en très faible quantité, et
- un dosage facile pour l'utilisateur qui ajoute un nombre entier de solides ou de sachets comprenant la composition.

Selon une variante particulière, la composition selon l'invention pourra comprendre un agent de coloration ou colorant. Ceci peut permettre notamment d'identifier ou de distinguer différents types de compositions entre elles selon la coloration. Avantageusement, le colorant sera incorporé dans la composition à hauteur de 0,00005 à 0,005%, préférentiellement de 0,0005 à 0,005%, plus préférentiellement de 0,0005 à 0,002% en poids total de la composition. Cette teneur permet d'obtenir une coloration visible de la composition tout en ne colorant pas l'eau de la piscine après introduction de la quantité nécessaire. Lors du procédé de fabrication, une telle teneur peut être obtenue par pulvérisation de la composition sous forme de poudre avec une solution diluée de colorant. Avantageusement, le colorant sera dilué avec une solution aqueuse, par exemple de l'eau. Le colorant sera choisi préférentiellement parmi les additifs alimentaires, comme par exemple le E 133.

La composition est constituée de chlorure de sodium, d'acide isocyanurique, de métasilicate de sodium, et éventuellement d'un colorant.

Cette composition permet une action désinfectante avec une chloration adaptée, une action stabilisant le chlore, une action anti-corrosion et une action anti-calcaire. Elle peut également avoir une action anti-algue et/ou une action anti-taches. De surcroît, l'action combinée du chlorure de sodium, de l'acide isocyanurique et du métasilicate permet l'obtention d'un traitement particulièrement efficace sur les actions désinfectante, anti-corrosion et anti-calcaire, sans générer d'éventuels effets secondaires, tels que la génération de trouble dans l'eau, et tout en préservant l'action stabilisante du chlore.

Selon un autre de ses aspects, l'invention a pour objet l'utilisation d'une composition selon l'invention en tant que composition désinfectante et ayant des fonctions anti-calcaire et anti-corrosion et éventuellement stabilisant le chlore, anti-algue et/ou anti-tache, en particulier dans le cadre du traitement des eaux de piscines par électrochloration.

Selon encore un autre de ses aspects, l'invention a pour objet l'utilisation du métasilicate et en particulier du métasilicate de disodium, en tant qu'agent anti-corrosion et anti-calcaire et éventuellement anti-tache dans une composition désinfectante pour le traitement des eaux de piscines.

Selon toujours un autre de ses aspects, l'invention a pour objet un procédé de traitement de l'eau de piscine par électrochloration, comportant une étape d'addition dans l'eau d'une composition selon l'invention. Avantageusement, une seule composition est ajoutée à l'eau de la piscine. Par « une seule composition », on entend qu'aucun additif ou produit supplémentaire n'est nécessaire car la composition selon l'invention permet d'obtenir un traitement complet de l'eau, c'est-à-dire un traitement comportant l'ensemble des actions mentionnées ci-avant.

L'addition de la composition selon l'invention dans l'eau et la mise en oeuvre de l'électrochloration sont donc suffisantes pour obtenir une action désinfectante, anti-corrosion, anti-calcaire et éventuellement stabilisante du chlore, anti-tache et/ou anti-algue. A titre d'exemple, lors de la mise en route de la piscine, une quantité efficace de la composition selon l'invention sera introduite dans l'eau de la piscine puis le processus d'électrochloration sera mis en route. Puis, pour l'entretien de la piscine, l'introduction régulière d'une petite quantité de composition sera effectuée.

L'invention sera mieux comprise à la lumière des exemples qui suivent, donnés à titre illustratif uniquement.

### Exemple 1 : Composition selon l'invention

Un exemple de composition selon l'invention est donné dans le tableau 1 ci-après :

**Tableau 1**

| Constituant | % en poids par rapport au poids total de chlorure de sodium: |
|---|---|
| - acide isocyanurique : | 0,3 à 0,8 |
| - métasilicate de disodium pentahydraté : | 0,20 à 0,75 |
| - colorant : | 0,002 |
| - chlorure de sodium : | qsp 100 |

Les différents constituants sont mélangés puis compressés sous forme de pastilles de 15 g.

### Exemple 2 : Evolution de la turbidité

L'objectif de ce test est de comparer l'effet de deux compositions à base de chlorure de sodium et d'acide isocyanurique, pour la désinfection de l'eau des piscines, l'une comportant de l'HEDP et l'autre, le métasilicate afin d'obtenir une composition selon l'invention.

### Matériel et méthodes

Pour tous les exemples qui suivent, les produits utilisés sont les suivants :
- Sel
- Acide Isocyanurique
- Aquacid© (poudre à 72% d'HEDP)
- Métasilicate de disodium pentahydraté
- Eau du robinet
- Eau de Javel du commerce (Titre de l'eau de javel: 2,15% en chlore actif)
- Acide chlorhydrique à 1 N
- Acide sulfurique à 35%
- Hydroxyde de sodium
- Acétone

Les échantillons sont préparés avec les proportions suivantes :

**Tableau 2**

| Echantillon | Eau du robinet (en ml) | Sel (en g/l) | Acide iso (en mg/l) | Chlore (en mg/l) | Aquacid (en mg/l) | Métasilicate (en mg/l) |
|---|---|---|---|---|---|---|
| HEDP | 300,0 | 4,0 | 28,0 | 3,0 | 40,0 | - |
| Métasilicate | 300,0 | 4,0 | 28,0 | 3,0 | - | 40,0 |

La mesure de la turbidité, en NTU (Nephelometric Turbidity Unit), s'effectue à l'aide d'un turbidimètre HACH à des intervalles de temps tels qu'indiqués dans le tableau 3. Les conditions de réaction ont été choisies afin d'accélérer l'éventuelle apparition du trouble.

### Résultats :

**Tableau 3**

| | Turbidité | | | | | | |
|---|---|---|---|---|---|---|---|
| Echantillon | T | T+ 94 h | T+ 118 h | T+ 142 h | T+ 168 h | T+ 192 h | T+ 216 h |
| HEDP | 0,243 | 20,5 | 22,5 | 30,1 | 34,2 | 44,4 | 56,8 |
| Métasilicate | 0,274 | 0,538 | 0,547 | 0,526 | 0,579 | 1,4 | 1,45 |

### Conclusion :

On constate que, placé dans les mêmes conditions, le métasilicate n'induit pas de trouble de l'eau détectable à l'oeil nu en piscine, contrairement à l'HEDP.

### Exemple 3 : Effet anti-calcaire de la composition selon l'invention

L'objectif de ce test est d'analyser la réaction des deux additifs (HEDP, métasilicate) en présence de calcium.

### Matériel et méthodes :

Le matériel utilisé est le suivant :
- béchers d'un volume de 400 mL neufs, pH-mètre, étuve à 70°C, film plastique ainsi que du matériel courant de laboratoire (dont verrerie de classe A).

Le mode opératoire se résume comme suit:
Pour chaque formulation testée, 300 mL de solution équivalent piscine sont préparées dans les béchers prévus. Chaque série d'analyse est déclinée sur 2 eaux: une de TH=30°f et une de TH=15°f pour avoir une palette de résultats qui couvrent une large gamme d'eaux. L'acide isocyanurique est ajouté sous forme liquide à partir d'une solution à 1 g/L. Les additifs (HEDP, métasilicate) des formulations sont ajoutés sous forme liquide à partir de solutions à 1 g/L. Les solutions sont systématiquement tamponnées, soit à l'acide sulfurique soit à la soude, pour avoir un pH de départ compris entre 6,8 et 7,4 (zone d'efficacité maximale du chlore). Les solutions restent filmées et sont analysées à 3 jours pour que les produits réagissent. Au moment de leurs analyses, les béchers sont placés dans une étuve à 70°C de manière à évaporer la phase liquide. Ils sont ensuite rincés avec 100 mL d'eau osmosée de manière à éliminer les dépôts solubles et ne laisser que les dépôts calcaires sur leurs parois. Les béchers sont ensuite recomplétés avec de l'eau osmosée et 1 mL d'acide chlorhydrique 1 N de manière à dissoudre les dépôts: les mesures sont réalisées sur ces solutions.

Les paramètres suivis au cours de l'étude sont les suivants:
Sur l'eau du robinet de départ sera mesuré: pH, TH (titre hydrotimétrique), calcium, TA (titre alcalimétrique), TAC (titre alcalimétrique complet).
Tout au long de l'expérience sera suivi: pH.
A la fin de l'expérience: calcium.

Un récapitulatif des formulations testées est donné dans le tableau 4 ci-dessous :

**Tableau 4**

| Numéro d'échantillon | Eau du robinet (en mL) | Sel (en g/L) | Acide iso (en mg/L) | Chlore (en mg/L) | Aquacid (en mg/L) | Métasilicate (en mg/L) |
|---|---|---|---|---|---|---|
| 1 | 300,0 | 0,0 | 0,0 | 3,0 | - | - |
| 2 | 300,0 | 4,0 | 0,0 | 3,0 | - | - |
| 11 | 300,0 | 4,0 | 28,0 | 3,0 | 24,0 | - |
| 14 | 300,0 | 4,0 | 28,0 | 3,0 | - | 20,0 |

### Résultats :

**Caractéristiques de la première eau de départ:**

| | |
|---|---|
| pH | 7,26 |
| TH (°f) | 27 |
| Calcium (en mg/L) | 109 |
| TA (°f) | 0 |
| TAC (°f) | 27,6 |

### Efficacité :

**Tableau 5**

| | Numéro échantillon | Calcium (mg/L) | % Calcium non calcaire |
|---|---|---|---|
| Témoin eau | 1 | 30,3 | - |
| Témoin sel | 2 | 24,6 | - |
| HEDP | 11 | 8,6 | 92,1 |
| Méta | 14 | 3,8 | 96,5 |

Les valeurs de calcium indiquées correspondent à la part de calcium de l'eau avant traitement, responsable de la production de calcaire. Avec le métasilicate, seul 3,5% du calcium de l'eau avant traitement se transforme en calcaire. Cette proportion atteint 7,9%, 22,6% et 27,8% pour la formulation avec de l'HEDP et les témoins sel et eau, respectivement.

**Caractéristiques de la deuxième eau de départ:**

| | |
|---|---|
| pH | 7,2 |
| TH (°f) | 14,6 |
| Calcium (en mg/L) | 44,3 |
| TA (°f) | 0 |
| TAC (°f) | 27,6 |

### Efficacité :

**Tableau 6**

| | Numéro échantillon | Calcium (mg/L) | % Calcium non calcaire |
|---|---|---|---|
| Témoin eau | 1 | 5,6 | - |
| Témoin sel | 2 | 4,0 | - |
| HEDP | 11 | 3,8 | 91,4 |
| Méta | 14 | 2,6 | 94,1 |

Avec le métasilicate, seul 5,9% du calcium de l'eau avant traitement se transforme en calcaire. Cette proportion atteint 8,6%, 9,0% et 12,7% pour la formulation avec de l'HEDP et les témoins sel et eau, respectivement.

### Conclusion :

Ces résultats démontrent que l'HEDP et le métasilicate ont une activité anti-calcaire. De plus, le métasilicate montre un activité anticalcaire encore meilleure que celle de l'HEDP.

### Exemple 4 : Effet anti-corrosion de la composition selon l'invention

L'objectif est de déterminer l'additif le plus efficace pour inhiber le phénomène de corrosion qui peut se manifester de manière néfaste dans un milieu piscine (tache sur les liners, rouille sur les pièces métalliques...)

### Matériel et méthodes :

Le principe de la méthode consiste à immerger complètement dans des solutions salines à 4 g/L avec les composés entrant dans les formulations, une plaque d'acier par bêcher, déposée verticalement et cela pour avoir un contact avec le verre le plus petit possible. Les formulations sont celles présentées au 4 de l'exemple 3.

L'efficacité des formulations est évaluée en fonction de la perte de fer de la plaque, au cours du temps, à savoir à 2 mois.

Le matériel utilisé est le suivant :
- béchers de 400 mL, pH-mètre, plaque d'acier d'une surface de 5,3 cm², film plastique ainsi que du matériel courant de laboratoire (dont verrerie de classe A).

Le mode opératoire se résume comme suit:

### 1. Opérations préliminaires :

- Décapage des plaques à l'acide chlorhydrique 1 N avec ultrasons pour avoir des plaques d'une qualité identique,
- Dégraissage de la plaque à l'acétone pour obtenir des surfaces actives identiques
- Pesage des plaques avec une précision au milligramme

Les solutions en concentration piscine sont préparées au préalable dans des fioles jaugées de 2L pour avoir des milieux bien homogènes entre eux. Les béchers sont remplis de 300 ml des solutions précédemment citées. Les béchers sont filmés avec du film alimentaire pour éviter l'introduction dans le milieu de pollution et pour éviter une évaporation trop importante.

Les paramètres mesurés sont les suivants:
- Sur l'eau du robinet: pH, TH, TA, TAC, calcium.

### 2. Opérations réalisées durant l'immersion des plaques:

Pour accélérer le phénomène de corrosion, on réalise un bullage à l'aide d'une pompe d'aquarium et de buses de refoulement montées sur un rail. Le temps de bullage est de 10 minutes. On aère les solutions les jours impairs de la semaine. Le bullage incluant une remontée de pH, il est ramené dans des valeurs d'utilisations des piscines, entre 6,8 et 7,4. Pour maintenir une salinité de 4 g/L et s'affranchir de l'évaporation naturelle, on procède à un ajout d'eau du robinet pour rester à un volume constant de 300 mL d'eau.

Les paramètres mesurés sont les suivants:
- Mesure du pH
- Observations sur les solutions et les plaques immergées 1 fois par jour avec prises de photos. Ces observations se font sans manipulation des béchers ni des solutions.

### 3. Traitement final des plaques:

La spatule de grattage est passée à l'ultrason, puis les plaques sont grattées à l'aide de la spatule pour récupérer le dépôt. Pour terminer le décapage de la plaque et ainsi ramasser tout le dépôt, la plaque ainsi que la spatule sont passées aux ultrasons dans un bain d'eau. Les dépôts sont ensuite filtrés sur porosité de 10 µm et 1,2 µm puis séchés.

Les paramètres mesurés sont les suivants:
- Sur les plaques, il est réalisé une pesée avec précision au milligramme.
- Sur les dépôts, il est réalisé une analyse du fer.
- Sur les solutions, une analyse du fer dissous est menée.

Les analyses sont conduites à 2 mois.

### Résultats :

**Caractéristiques de l'eau de départ:**

| | |
|---|---|
| pH | 7,33 |
| TH (°f) | 40,6 |
| Calcium (en mg/l) | 148,7 |
| TA (°f) | 0 |
| TAC (°f) | 27,6 |

### Effet anti-corrosion :

**Tableau 7**

| | | Résultats à 2 mois |
|---|---|---|
| | Numéro échantillon | Perte en Fe/plaque (%) |
| Témoin eau | 1 | 3,54 |
| Témoin sel | 2 | 3,07 |
| HEDP | 11 | 2,80 |
| Métasilicate | 14 | 1,63 |

### Conclusion :

Ces résultats démontrent que l'HEDP et le métasilicate ont une activité anti-corrosion. De plus, le métasilicate montre un activité anti-corrosion encore meilleure que celle de l'HEDP.

### Exemple 5 : Effet stabilisant du chlore de la composition selon l'invention

En présence du rayonnement UV, le chlore est détruit photochimiquement. L'acide isocyanurique permet de réduire la destruction du chlore sous l'effet des UV. Le but de cette étude est de montrer que les additifs des formulations permettent un maintien de l'effet stabilisateur du chlore.

### Matériel et méthodes :

Le matériel utilisé est le suivant : seau d'un volume de 5 litres, pH-mètre ainsi que du matériel courant de laboratoire (dont verrerie de classe A).

Le mode opératoire se résume comme suit:
Pour chaque formulation testée, on prépare deux litres de solution dans les seaux prévus. L'acide isocyanurique est ajouté sous forme liquide à partir d'une solution à 1 g/L. Les additifs (métasilicates, HEDP) des formulations sont ajoutés sous forme liquide à partir de solutions à 1 g/L. La dose de chlore nécessaire pour cette étude est apportée par de l'eau de javel, dans des quantités permettant d'obtenir des solutions à 3 mg/l en Cl2. Les solutions sont systématiquement tamponnées, soit à l'acide sulfurique soit à la soude, pour avoir un pH de départ compris entre 6,8 et 7,4 (zone d'efficacité maximale du chlore)

Les paramètres suivis au cours de l'étude sont les suivants:
- Sur l'eau de départ sera mesuré: pH, chlore résiduel, TH, calcium, TA, TAC.
- Tout au long de l'expérience sera suivi: pH, chlore résiduel.

Les mesures de chlore sont effectuées à l'aide d'un dosage quantitatif du chlore. Les mesures sont effectuées aux l'instants T + 32h10 et T + 50h10, la formulation des compositions à l'instant T étant donné au tableau 4.

### Résultats :

**Caractéristiques de l'eau de départ:**

| pH | 7,33 |
|---|---|
| Chlore résiduel (en mg/l) | 0,3 |
| TH (°f) | 40,6 |
| Calcium (en mg/l) | 148,7 |
| TA (°f) | 0 |
| TAC (°f) | 27,6 |

### Stabilisation du chlore :

**Tableau 7**

| | | T + 32h10 | | T + 50h10 | |
|---|---|---|---|---|---|
| | Numéro échantillon | Chlore résiduel (en mg/L) | Perte en chlore (%) | Chlore résiduel (en mg/L) | Perte en chlore (%) |
| HEDP | 11 | 0 | 100,00 | 0 | 100,00 |
| Métasilicate | 14 | 1,89 | 36,36 | 1,1 | 62,96 |

### Conclusion :

Ces résultats démontrent que le métasilicate préserve la concentration en chlore résiduel mieux que l'HEDP.

## Revendications

1. Composition pour le traitement de désinfection de l'eau de piscine par électrochloration, **caractérisée en ce que** ladite composition consiste en :
- un chlorure alcalin qui est du chlorure de sodium,
- un métasilicate de sodium sous forme pentahydratée,
- un acide isocyanurique à une teneur de 0,3 à 1,0 % en poids par rapport au poids total de chlorure alcalin,
- optionnellement un colorant,
la teneur en métasilicate de sodium pentahydraté étant de 0,10 à 1,0 %, en poids par rapport au poids total de chlorure alcalin

2. Composition selon la revendication 1, dans laquelle la teneur en métasilicate de sodium pentahydraté est de 0,20 à 0,70% en poids par rapport au poids total de chlorure alcalin.

3. Composition selon la revendication 1, dans laquelle la teneur en métasilicate de sodium pentahydraté est de 0,60 à 1,0% en poids par rapport au poids total de chlorure alcalin.

4. Composition selon l'une au moins des revendications 1 à 3, dans laquelle la teneur en acide isocyanurique est de 0,5 à 0,9 % en poids par rapport au poids total de chlorure alcalin.

5. Composition selon l'une quelconque des revendications 1 à 4, se présentant sous une forme solide, en particulier sous forme de galets, comprimés, blocs, pilules, pastilles, compacts, agglomérés ou granulés.

6. Utilisation d'une composition selon l'une quelconque des revendications 1 à 5, en tant que composition désinfectante et ayant des fonctions anti-calcaire et anti-corrosion et présentant éventuellement une fonction stabilisant le chlore, anti-algue et/ou anti-tache.

7. Procédé de traitement de l'eau de piscine par électrochloration, permettant une action désinfectante, anti-corrosion et anti-calcaire et éventuellement stabilisante du chlore, anti-algue et/ou anti-tache comportant une étape d'addition à l'eau d'une composition selon l'une quelconque des revendications 1 à 5.

8. Utilisation du métasilicate de sodium, en tant qu'agent anti-corrosion et anti-calcaire dans une composition désinfectante pour le traitement des eaux de piscines telle que définie dans l'une au moins des revendications 1 à 5.

9. Utilisation du métasilicate en tant qu'agent anti-corrosion et anti-calcaire selon la revendication 8, **caractérisée en ce qu'**il s'agit de métasilicate de disodium.

10. Utilisation selon l'une des revendications 8 ou 9, **caractérisée en ce que** le métasilicate est utilisé en outre comme agent anti-tache.

## Patentansprüche

1. Zusammensetzung zur Desinfektion von Schwimmbadwasser durch Elektrochlorierung, **dadurch gekennzeichnet, dass** die Zusammensetzung besteht aus:
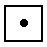 einem alkalischen Chlorid, bei dem es sich um Natriumchlorid handelt,
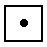 einem Natrium-Metasilikat in Formvon Pentahydrat,
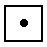 einer Isocyanurs±ure in einer Menge von 0,3 bis 1,0 Gew.-%, bezogen auf das Gesamtgewicht des alkalischen Chlorids,
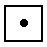 optional einem Farbstoff,
wobei der Gehalt an Natrium-Metasilikat-Pentahydrat von 0,10 bis 1,0 Gew.-%, bezogen auf das Gesamtgewicht des alkalischen Chlorids, betr±gt.

2. Zusammensetzung nach Anspruch 1, wobei der Gehalt an Natrium-Metasilikat-Pentahydrat von 0,20 bis 0,70 Gew.-%, bezogen auf das Gesamtgewicht des alkalischen Chlorids, betr±gt.

3. Zusammensetzung nach Anspruch 1, wobei der Gehalt an Natrium-Metasilikat-Pentahydrat von 0,60 bis 1,0 Gew.-%, bezogen auf das Gesamtgewicht des alkalischen Chlorids, betr±gt.

4. Zusammensetzung nach mindestens ei nem der Anspruche 1 - 3, wobei der Gehalt an Isocyanurs±ure von 0,5 bis 0,9 Gew.-%, bezogen auf das Gesamtgewicht des alkalischen Chlorids, betr±gt.

5. Zusammensetzung nach einem der Anspruche 1 - 4, wobei die Zusammensetzung in fester Form vorliegt, insbesondere in Form von Kies, Tabletten, BlØcken, Pillen, Pastillen, Presslingen, Agglomeraten oder G ranul aten.

6. Verwendung der Zusammensetzung nach einem der Anspruche 1 - 5 als Desinfektionszusammensetzung und mit Anti-Kalk- undAnti-Korrosions-Funktion und gegebenenfalls Stabil isierungsfunktion fur Chlor, Anti-Algen- und/oder Anti-Flecken-Funktion.

7. Verfahren zur Behandlung von Schwimmbadwasser durch Elektrochlorierung, welches desinfizierende, Anti-Korrosions- und A nti-Kalk-Wirkung und gegebenenfalls stabilisierende Wirkung fur Chlor, Anti-Algen- und/oder Anti-Flecken-Wirkung erlaubt, umfassend einen Schritt, bei dem zu dem Wasser ei ne Zusammensetzung nach ei nem der Anspruche 1 - 5 zugegeben wird.

8. Verwendung von Natrium-Metasilikat als Anti-Korrosions- und Anti-KalkMittel in einer Desinfektionszusammensetzung zur Behandlung von Schwimmbadwassern definiert nach mindestens einem der Anspruche 1 - 5.

9. Verwendung von Metasilikat als Anti-Korrosions- und Anti-Kalk-Mittel nach Anspruch 8, **dadurch gekennzeichnet, dass** es sich um ein Dinatrium-Metasilikat handelt.

10. V erwendung nach Anspruch 8 oder 9, **dadurch gekennzeichnet, dass** das Metasilikat zudem als Anti-Flecken-Mittel verwendet wird.

## Claims

1. A composition for disinfection treatment of swimming pool water by electrochlorination, **characterized in that** said composition consists of:
• an alkali chloride,which is sodium chloride;
• a sodium metasilicate in the pentahydrated form;
• isocyanuric acid, wherein the quantity of isocyanuric acid is 0.3% to 1.0%, by weight relative to the total weight of alkali chloride
• optionally, a dye
wherein the quantity of sodium metasilicate pentahydrate is 0.10% to 1.0% by weight relative to the total weight of alkali chloride.

2. A composition according to claim 1, wherein the quantity of sodium metasilicate pentahydrate is 0.20% to 0.70% by weight relative to the total weight of alkali chloride.

3. A composition according to claim 1, wherein the quantity of sodium metasilicate pentahydrate is 0.60% to 1.0% by weight relative to the total weight of alkali chloride.

4. A composition according to any one of claims 1 to 3, wherein the quantity of isocyanuric acid is 0.5% to 0.9% by weight relative to the total weight of alkali chloride.

5. A composition according to any one of claims 1 to 4, in the solid form, in particular in the form of pebbles, tablets, blocks, pellets, chips, compacted pieces, agglomerates, or granules.

6. The use of a composition according to any one of claims 1 to 5, as a disinfecting composition and having anti-limescale and anti-corrosion functions and optionally having a chlorine stabilizing, anti-algae and/or anti-staining function.

7. A method of treating swimming pool water by electrochlorination in order to carry out a disinfecting, anti-corrosion and anti-limescale action and optionally a chlorine stabilizing, anti-algae and/or anti-staining action, comprising a step of adding a composition according to any one of claims 1 to 5 to the water.

8. The use of sodium metasilicate, as an anti-corrosion and anti-limescale agent in a disinfecting composition for the treatment of swimming pool water according to any one of claims 1 to 5.

9. The use of metasilicate, as an anti-corrosion and anti-limescale agent according to claim 8, wherein it is disodium metasilicate.

10. The use according to any one of claims 8 or 9, wherein metasilicate is also used as an anti-staining agent.
